# EUROPEAN PATENT APPLICATION

(11) **EP 1 764 568 A1**
(43) Date of publication of application: **21.03.2007**
(21) Application number: 05709904.6
(22) Date of filing: 08.02.2005
(51) Int. Cl.: F25B 41/06, F25B 41/00

(54) **EXPANSION VALVE OF REFRIGERATING APPARATUS**

(30) Priority: 10.02.2004 JP 2004032884
(71) Applicant: DAIKIN INDUSTRIES, LTD., Osaka-shi, Osaka 530-8323 (JP)
(72) Inventor: YUKIMOTO, Tooru c/o DAIKIN INDUSTRIES, LTD., Sakai-shi Osaka 5918511 (JP)
(74) Representative: HOFFMANN EITLE
(86) International application number: PCT/JP2005/001852
(87) International publication number: WO 2005/075903

(57) **Abstract**

An expansion valve capable of reducing refrigerant passing noise by miniaturizing air bubbles in a gas-liquid two-phase refrigerant flowing in the expansion valve without decreasing the adjusting range of the opening adjusting function of an orifice and a refrigerating apparatus using the expansion valve. The expansion valve comprises a valve body (1), two ports (2) and (3) formed, as the inlet and outlet of the refrigerant, in the valve body (1), the orifice (5) formed in the refrigerant passage (4), and a turbulent part (6) causing turbulence in the flow of the refrigerant formed in the refrigerant passage (4) on the upstream side of the orifice (5).

## Description

### TECHNICAL FIELD

The present invention relates to an expansion valve for a refrigerating apparatus. More particularly, the present invention relates to a technique for reducing noise produced when a refrigerant flows through an expansion valve for a refrigerating apparatus of an air conditioner or the like.

### BACKGROUND ART

A refrigerating apparatus normally has an expansion valve, for example, an electric expansion valve, arranged between a condenser and an evaporator.

Japanese Laid-Open Patent Publication No. 2000-274886 describes an electric expansion valve of the type described above. The electric expansion valve has a valve body provided with refrigerant pipe connection ports, which define an inlet and outlet for refrigerant, and a valve chamber formed therein. A needle valve and a bellows, which is connected to the needle valve, are arranged in the valve chamber.

In the electric expansion valve, the needle valve is moved vertically by the power of a pulse motor and the biasing force of the bellows to adjust an open amount of a valve hole, which functions as a variable orifice. The orifice reduces the pressure and controls the flow rate of liquid refrigerant flowing into the valve chamber through the inlet port before the liquid refrigerant is sent to the evaporator through the outlet port.

### PROBLEMS THAT THE INVENTION IS TO SOLVE

However, in a refrigerating apparatus, such as an air conditioner, due to installation conditions or changes in operation conditions, gas bubbles are apt to be produced in a liquid pipe leading to an inlet port of the expansion valve. This produces a gas-liquid two-phase refrigerant flow and causes a slag flow or plug flow in which large gas bubbles are intermittently generated in the refrigerant flow. The generation of such slag flow or plug flow results in a state in which liquid refrigerant and gas refrigerant alternately pass through the orifice thereby causing non-continuous variation pressure fluctuations. This produces non-continuous refrigerant flow noise.

With regards to this problem, Japanese Laid-Open Patent Publication No. 7-146032 describes in Figs. 1 and 2 a technique in which a porous body or fine tubes are arranged in a pipe adjacent to an expansion valve port so as to finely disperse gas bubbles in the refrigerant flowing into the expansion valve. However, the refrigerant flowing through the porous body or the fine tubes is subjected to a flow resistance. This restricts the flow rate of the refrigerant flowing into expansion valve and narrows the controllable range of the open amount adjustment function provided by the orifice. Further, the porous body or the fine tubes are susceptible to deformation due to the pressure of the refrigerant flow. Also, clogging may occur in the porous body or fine tubes through which the refrigerant passes. These factors lower the reliability of the expansion valve.

Japanese Laid-Open Patent Publication No. 7-146032 also describes in Figs. 3 and 4 an expansion valve including a second orifice, which has a fixed open amount, in the inlet side of the orifice. However, when the second orifice is provided in such a manner, the controllable range of the open adjustment function with the expansion valve is further restricted than the case described above. Accordingly, it is difficult to maintain high reliability for the expansion valve.

The present invention has been made in view of the problems in the prior art. It is an object of the present invention to provide an expansion valve capable of reducing refrigerant passage noise while ensuring high reliability of the expansion valve. More specifically, it is an object of the present invention to provide an expansion valve enabling fine dispersion of gas bubbles in a gas-liquid two-phase refrigerant flow flowing into the expansion valve while maintaining the function for adjusting the open amount of a variable orifice.

It is another object of the present invention to provide a refrigerating apparatus employing the above expansion valve.

### MEANS FOR SOLVING THE PROBLEMS

To achieve the above object, the present invention is related to an expansion valve for arrangement in a refrigerant circuit of a refrigerating apparatus. The expansion valve includes a valve chamber. An inlet is formed in the valve chamber and connected to an upstream refrigerant pipe to draw a refrigerant flow into the valve chamber. An outlet is formed in the valve chamber and connected to a downstream refrigerant pipe to discharge the refrigerant flow from the valve chamber. A refrigerant passage is formed between the inlet and outlet in the valve chamber. An orifice variably controls the flow rate of the refrigerant flow in the refrigerant passage. A turbulent portion causes refrigerant flow turbulence in the refrigerant passage upstream of the orifice.

The orifice includes a valve seat, which is formed in the valve chamber and has a valve hole, and a valve element for adjusting an open amount of the valve hole.

The turbulent portion is formed by ridges and valleys in either one of an inner surface of the valve chamber or an outer surface of the valve element.

The turbulent portion is a spiral groove.

The turbulent portion is formed by a meandering passage formed by meandering the refrigerant passage upstream of the orifice between the valve element and the valve seat.

The meandering passage includes an axial passage, which guides the refrigerant flow in an axial direction of the valve element between the valve element and a wall surface of the valve chamber, and an oblique passage, which obliquely changes the direction of the refrigerant flow from the axial passage.

The oblique passage is formed by a recess formed in a distal surface of the valve element and a projection formed in the valve seat, the recess and the projection have opposed, spaced surfaces extending substantially parallel to each other.

The turbulent portion includes a gap for varying a cross-sectional area of the refrigerant passage.

The refrigerant passage includes a gap enlarging a passage cross-sectional area between the turbulent portion and the orifice.

The turbulent portion is formed upstream and downstream of the valve seat in the refrigerant passage.

The valve element and the valve chamber are formed upstream and downstream of the valve seat in the refrigerant passage. The turbulent portion is formed in an inner wall surface of each of the valve chambers or an outer surface of each of the valve elements, and the two valve elements are connected by a shaft extending through the valve hole of the valve seat.

A refrigerating apparatus of the present invention employs the above expansion valve.

### EFFECTS OF THE INVENTION

The expansion valve of the present invention causes turbulence in the refrigerant flowing into the expansion valve with a turbulent portion formed in a refrigerant passage upstream of an orifice. This enables fine and uniform dispersion of gas bubbles in the gas-liquid two-phase refrigerant flow without reducing the pressure of the refrigerant. Accordingly, pressure fluctuations in the gas-liquid two-phase refrigerant flow are reduced at the orifice downstream of the turbulent portion. Hence, noise produced when the refrigerant passes through the expansion valve orifice and non-continuous noise are reduced.

The turbulent portion may be formed near the orifice by forming the turbulent portion in a wall surface of a valve chamber housing the valve element or in an external surface of the valve element. This makes it possible to prevent gas bubbles, which have been finely dispersed by the turbulence of the refrigerant flow, from being clustered again before reaching the orifice.

Further, by forming the turbulent portion as a spiral groove, a spiral flow component is added to the refrigerant flow. As a result, turbulence affects the refrigerant flow more effectively making the gas bubbles finer and more uniform.

A meandering passage is formed immediately before the orifice in the refrigerant passage by meandering the refrigerant passage between the valve element and the valve seat forming the orifice. The meandering passage functions as a turbulent portion. In this case, the turbulent portion is located upstream of and immediately before the orifice so that the re-clustering of the gas bubbles which have been made fine by the turbulent portion is suppressed more effectively. Further, the meandering passage may be configured to have an axial passage formed between the valve element and the valve chamber wall surface to guide the refrigerant flow in the axial direction of the valve element, and an oblique passage formed between a recess in a distal surface of the valve element and a projection on the valve seat to change the direction of the refrigerant flow. In this case, the meandering passage is easily formed upstream of and immediately before the orifice.

Further, the turbulent portion may be formed as a space for varying the cross-sectional area of the refrigerant passage so that the turbulent portion causes refrigerant flow turbulence without substantially reducing the pressure of the refrigerant flow. Thus, the gas bubbles in the refrigerant are finely and uniformly dispersed.

A gap formed between the turbulent portion and the orifice to enlarge the cross-sectional area of the passage causes turbulence in the refrigerant flow with the turbulent portion, and the turbulence of the refrigerant flow by the gap produces a synergistic effect so that the gas bubbles become finer and more uniform without reducing the open amount adjustment range of the orifice.

In the case of an expansion valve in which the refrigerant passes reversibly, a turbulent portion is formed upstream and downstream of the valve seat in the refrigerant passage. Thus, noise produced by the passage of the refrigerant is reduced regardless of the direction the refrigerant flows. Accordingly, an expansion valve having such structure is applicable for a heat-pump refrigerant cycling system such as a heat-pump air conditioner in which the direction of refrigerant flow is reversibly switched, so that noise produced when the refrigerant passes through the orifice and non-continuous noise is reduced by the same expansion valve. In this case, when the turbulent portions are formed respectively in the inner wall surface of the valve chambers or in the outer surface of the valve elements upstream and downstream of the valve seat, the valve elements are connected by a shaft extending through the valve hole. This simplifies the structure of the expansion valve which reducing noise produced when the reversible refrigerant flow passes through the orifice and non-continuous noise.

When the expansion valve of the present invention is applied to a refrigerating apparatus, the operation noise of the refrigerating apparatus becomes less.

### BRIEF DESCRIPTION OF THE DRAWINGS

Fig. 1 is a cross-sectional view showing a main part of an expansion valve according to a first embodiment of the present invention;
Fig. 2 is a cross-sectional view showing a main part of an expansion valve according to a second embodiment of the present invention;
Fig. 3 is a cross-sectional view showing a main part of an expansion valve according to a third embodiment of the present invention;
Fig. 4 is a cross-sectional view showing a main part of an expansion valve according to a fourth embodiment of the present invention; and
Fig. 5 is a cross-sectional view showing a main part of an expansion valve according to a fifth embodiment of the present invention.

### DESCRIPTION OF THE PREFERRED EMBODIMENTS

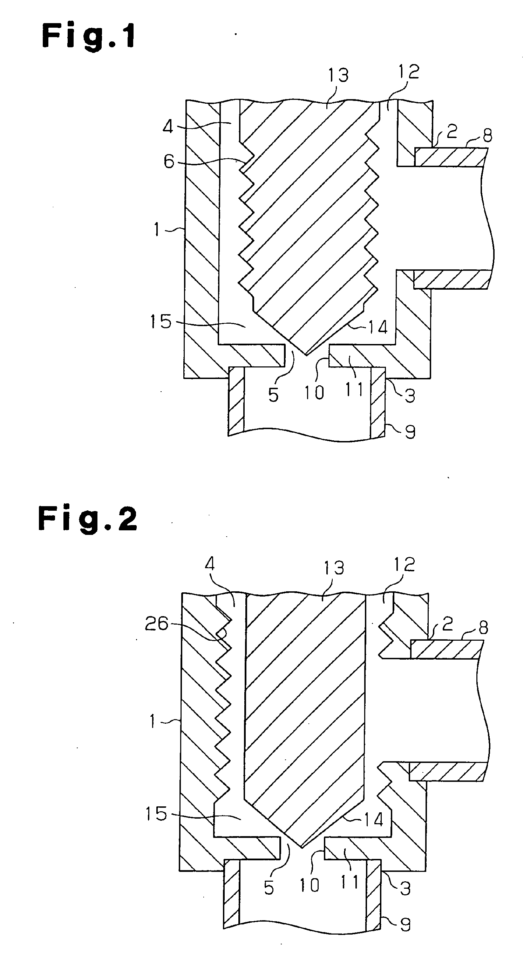

An expansion valve according to a first embodiment of the present invention will now be described with reference to Fig. 1.

The expansion valve arranged in a refrigerant circuit of a refrigerating apparatus includes a valve body 1 having a valve chamber 12 with a circular cross-section. The valve chamber 12 is connected to an upstream liquid refrigerant pipe 8 via an inlet port 2 and to a downstream pipe 9 leading to an evaporator via an outlet port 3. The expansion valve includes two ports 2 and 3 formed in the valve body 1 to function as an inlet and outlet for refrigerant, a refrigerant passage 4 formed in the valve body 1 to connect the ports 2 and 3, an orifice 5 having a variable opening is formed in the refrigerant passage 4, and a turbulent portion 6.

A substantially cylindrical valve element 13, which is arranged in the valve chamber 12, has a distal end defining a conical valve portion 14. The refrigerant passage 4 enables passage of refrigerant between the ports 2 and 3 and includes a valve seat 11 having a circular valve hole 10 and partitioning the refrigerant passage 4.

The turbulent portion 6 causes turbulence in the flow of the refrigerant passing through the passage 4. The turbulent portion 6 includes ridges and valleys formed on the outer surface of the cylindrical part of the valve element 13. More specifically, the turbulent portion 6 is a spiral groove.

The variable orifice 5 is formed by the valve element 13 and the valve hole 10. The valve element 13 is moved in the vertical direction as viewed in Fig. 1 by a pulse motor (not shown) so that the valve portion 14 selectively moves toward or away from the valve hole 10 and adjusts the open amount of the valve hole 10.

Further, a gap 15 is formed between the turbulent portion 6 and the orifice 5 so as to enlarge the cross-sectional area of the refrigerant passage 4. In other words, the gap 15 varies the cross-sectional area of the refrigerant passage 4 between the wall surface of the valve chamber 12 and the valve element 13 with the conical valve portion 14 and the valve seat 11 at the bottom of the valve chamber 12, which is a cylindrical space.

In the above expansion valve, the turbulent portion 6 causes turbulence in the high-pressure gas-liquid two-phase refrigerant flow, which contains gas bubbles and enters from the inlet port 2. The gas bubbles contained in the refrigerant flow are finely and uniformly dispersed by the turbulence. The turbulent flow of the refrigerant then enters the gap 15 in which the cross-sectional area of the passage is enlarged. This further makes the gas bubbles contained in the refrigerant finer and more uniform before flowing into the orifice 5. This reduces pressure fluctuations in the orifice 5 caused by the gas bubbles in the refrigerant flow. Thus, in the expansion valve, the noise produced when the refrigerant flow passes through the orifice 5 is reduced. Further, the refrigerant passage noise becomes continuous and reduces non-continuous noise such as that produced in the expansion valve of the prior art.

The reduction in refrigerant flow noise and non-continuous noise would still be enabled even when eliminating the gap 15, which enlarges the cross-sectional area of the refrigerant passage 4 between the turbulent portion 6 and the orifice 5.

A second embodiment of the present invention will now be described with reference to Fig. 2. In Fig. 2, components that are the same as those in the first embodiment will be denoted by the same reference numerals and will not be described.

An expansion valve of this embodiment has the same structure as the first embodiment, except in that the position of the turbulent portion 6 has been altered from that in the expansion valve of the first embodiment.

Specifically, a turbulent portion 26 is formed in the wall surface of the valve chamber 12 instead of the outer surface of the valve element 13. The turbulent portion 26 in the second embodiment also takes the form of a spiral groove in the same manner as the first embodiment. Accordingly, the turbulent portion 26 has the same advantages as the turbulent portion 6 of the first embodiment.

As described above, the expansion valve of this embodiment also reduces noise produced when the refrigerant passes through the orifice 5 and non-continuous noise.

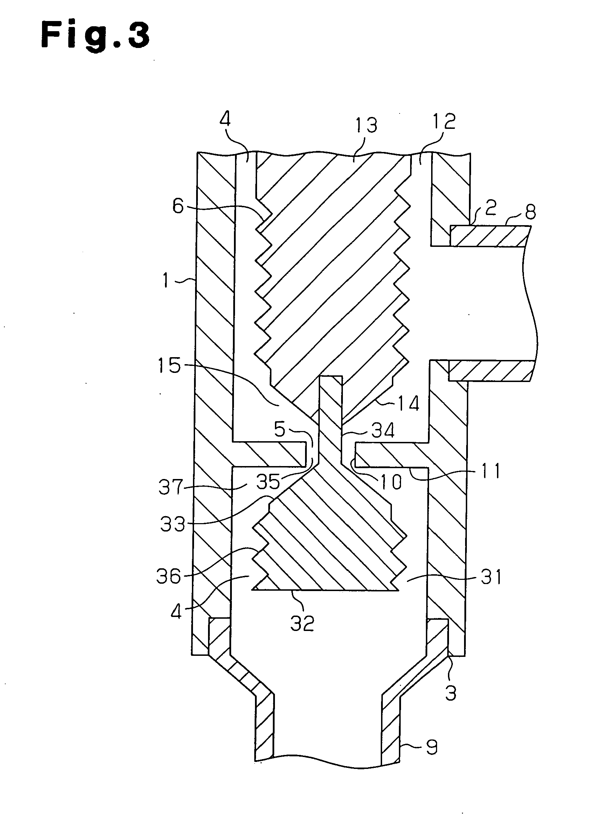

A third embodiment of the present invention will now be described with reference to Fig. 3. In Fig. 3, components that are the same as those in the first embodiment will be denoted by the same reference numerals and will not be described.

In the third embodiment, an expansion valve is used for a refrigerant flow of which flow direction is reversible. Therefore, turbulent portions 6 and 36 are provided on the upstream and downstream sides of the valve seat 11, respectively.

In comparison with the first embodiment, the valve body 1 is longer, and a valve chamber 31 is formed between the valve seat 11 and the port 3. A substantially cylindrical valve element 32 is arranged in the valve chamber 31. The valve element 32 has a distal end defining a conical valve portion 33. The valve element 32 and the valve element 13 are connected to each other by a small-diameter shaft 34, which extends through the valve hole 10. Accordingly, the two valve elements 13 and 32 are controlled to move integrally by a pulse motor (not shown) for driving the valve element 13.

The valve portion 33 of the valve element 32 is controlled to move toward or away from the valve hole 10 by the pulse motor to adjust the open amount of the valve hole 10. This forms an orifice 35 having a variable open amount.

The valve element 32 has an outer surface on which a spiral groove is formed as a turbulent portion 36 in the same manner as the valve element 13 of the first embodiment.

Further, a gap 37 is formed between the turbulent portion 36 and the orifice 35 so as to enlarge the cross-sectional area of the refrigerant passage 4.

The expansion valve of the third embodiment has the same advantages as the first embodiment when gas-liquid two-phase refrigerant flows into the valve through the inlet port 2 and is capable of reducing noise produced when the refrigerant passes through the orifice 5 and non-continuous noise.

When high-pressure gas-liquid two-phase refrigerant, which contains gas bubbles, flows through the port 3, the expansion valve of the third embodiment functions as described below. This usage takes place when the expansion valve is used in a heat-pump refrigerant circuit and refrigerant flows reversibly.

The gas-liquid two-phase refrigerant flow flowing through the port 3 becomes turbulent due to the turbulent portion 36 when flowing through the passage 4 formed between the valve element 32 and the valve chamber 31. This finely and uniformly disperses gas bubbles in the gas-liquid two-phase refrigerant flow. The gas-liquid two-phase refrigerant flow, which becomes a turbulent flow, flows into the gap 37
in which the cross-sectional area of the passage is enlarged. This makes the gas bubbles in the gas-liquid two-phase refrigerant finer and more uniform. As a result, when flowing into the orifice 35, the refrigerant is in a state
in which fine gas bubbles are uniformly distributed. This reduces pressure fluctuations in the orifice 35. Thus, for refrigerant flowing in the reverse direction, the expansion valve of the third embodiment also reduces noise produced when the refrigerant passes through the orifice 35, and continuous refrigerant passage noise reduces non-continuous noise such as that produced in the expansion valve of the

### prior art.

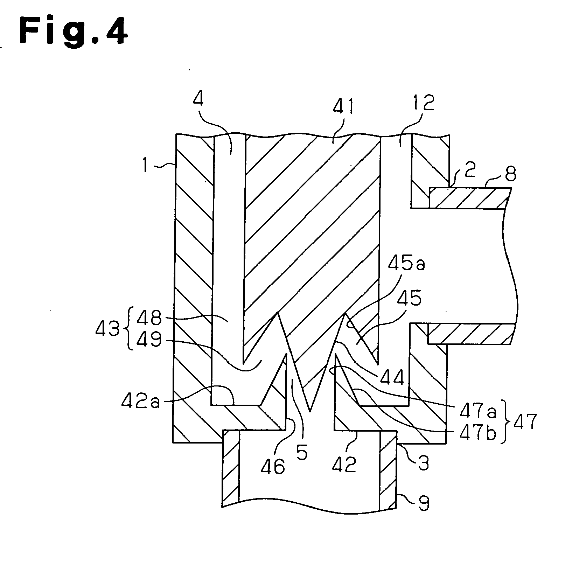

A fourth embodiment of the present invention will now be described with reference to Fig. 4. In Fig. 4, components that are the same as those in the first embodiment will be denoted by the same reference numerals and will not be described.

An expansion valve of the fourth embodiment is formed by modifying the turbulent portion in the expansion valve of the first embodiment. Accordingly, the valve body and the valve seat of the first embodiment are also modified.

A turbulent portion 43 is defined by a meandering passage formed immediately before the variable orifice in the refrigerant passage 4 by meandering the refrigerant passage between the valve element 41 and the valve seat 42.

The cylindrical valve element 41 has a distal end defining a needle valve 44. Further, a recess 45 having a V-shaped cross section is formed in the distal end of the valve element 41 between the outer circumference and the needle valve 44. A valve seat 42 has a central portion in which a valve hole 46 is formed. The valve seat 42 includes a projection 47 including a wide surface 47a projecting from the wall of the valve hole 46 towards the valve element 41, and an inclined surface 47b descending from the top of the wide surface 47a toward the outer circumference of the valve body 1. The part of the valve seat 42 outward from the projection 47 forms a flat surface 42a. The descending inclined surface 47b of the projection 47 is generally parallel to an inclined surface 45a formed in the outer portion of the recess 45.

An axial passage 48 is defined at the bottom of the valve chamber 12 at the side of the valve seat 42 between the valve element 41 and the wall surface of the valve chamber 12 so that refrigerant flows through the axial passage 48 in the axial direction of the valve element 41. Further, an oblique passage 49 is formed between the inclined surface 47b of the projection 47 and the inclined surface 45a of the recess 45 so as to change the direction of the refrigerant flow in the axial passage 48 obliquely towards the valve element 41. The direction of the refrigerant flow is further changed at the upper end of the oblique passage 49, or the top of the recess 45, so that the refrigerant flows towards the valve hole 46.

The turbulent portion 43 includes the axial passage 48 and the oblique passage 49.

In the fourth embodiment, gas-liquid two-phase refrigerant flowing through the port 2 passes through the refrigerant passage 4 formed between the valve element 41 and the wall surface of the valve chamber 12 and reaches the turbulent portion 43. The direction of the refrigerant flowing through the axial passage 48 is changed by the turbulent portion 43 toward the oblique passage 49 so as to cause turbulence in the refrigerant flow. This makes the gas bubbles in the gas-liquid two-phase refrigerant fine and uniform.

Thus, the gas bubbles in the refrigerant flowing into the orifice 5 become fine and uniform due to the turbulent portion 43 located immediately before the orifice 5. This reduces pressure fluctuations in the orifice 5. As a result, the expansion valve of the fourth embodiment reduces noise produced when the refrigerant passes through the orifice 5. Additionally, the refrigerant passage noise becomes continuous and reduces non-continuous noise produced in expansion valves of the prior art.

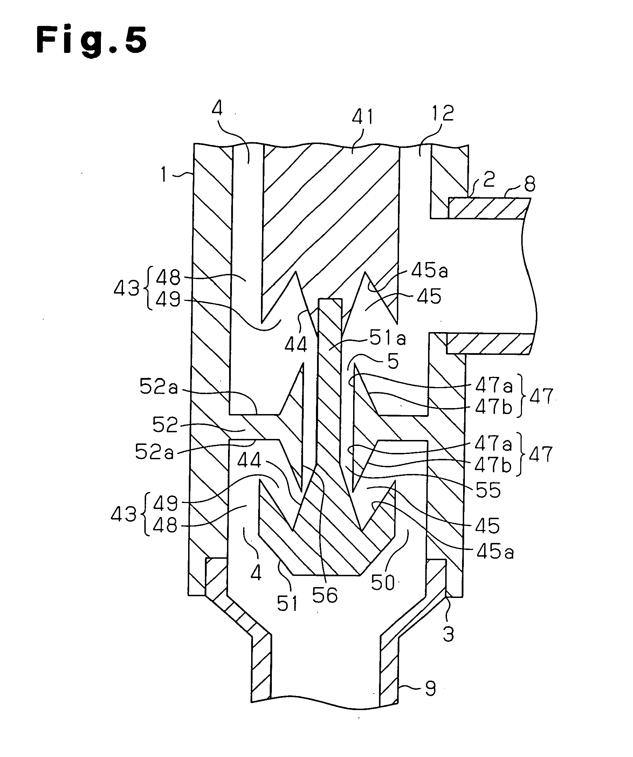

A fifth embodiment of the present invention will now be described with reference to Fig. 5. In Fig. 5, components that are the same as those in the fourth embodiment will be denoted by the same reference numerals and will not be described.

An expansion valve of the fifth embodiment differs from the expansion valve of the fourth embodiment in that the turbulent portion 43 of the fourth embodiment is provided on both the upstream side and downstream side of the valve seat to enable the refrigerant to flow reversibly. The following description will be focused on differences from the fourth embodiment.

The expansion valve of the fifth embodiment has a valve chamber 50 defined between a valve seat 52 and a port 3. A valve element 51 is arranged in the valve chamber 50.

The valve element 51 is formed by shortening the cylindrical shaft of the valve element 41. Like the valve element 41, the valve element 51 has a distal end defining a needle valve 44 and a recess 45, which has a V-shaped cross-section.

The valve seat 52 of the fifth embodiment has a central portion through which a valve hole 56 extends. In each of the two valve chambers, the valve seat 52 further has a projection 47 including a wide surface 47a, which projects from the wall surface of the valve hole 56 towards the two valve elements 41 and 51, and an inclined surface 47b, which descends from the top of the wide surface 47a to the outer circumference of the valve body 1. Flat surfaces 52a are formed on the valve seat 52 extending toward the outer circumference of the projection 47.

The valve element 51 is connected to the valve element 41 by a shaft 51a extending through the valve hole 56 and is controlled by a pulse motor (not shown) to integrally move with the valve element 41.

The needle valve 44 of the valve element 51 is moved by the pulse motor selectively toward and away from the valve hole 56 so' as to adjust the opening of the valve hole 56. Accordingly, the needle valve 44 of the valve element 51 forms a variable orifice 55 for adjusting the open amount of the valve hole 56 when the refrigerant flows in the reverse direction.

In the expansion valve of the fifth embodiment, an axial passage 48 is formed in the bottom of each of the valve chambers 12 and 50 at the side of the valve seat 42 between the valve elements 41 and 51 and the wall surface of the valve chambers 12 and 50 so that the refrigerant flows through the axial passage 48 in the axial direction of the valve elements 41 and 51. Further, an oblique passage 49 is formed between the inclined surface 47b of the projection 47 and the inclined surface 45a of the recess 45 so that the direction of the refrigerant flow is changed and the refrigerant flows obliquely from the axial passage 48 towards the valve elements 41 and 51. The direction of the refrigerant flow is further changed at the upper end of the oblique passage 49 so that the refrigerant flows towards the valve hole 56.

A turbulent portion 43 including the axial passage 48 and the oblique passage 49 is thus formed upstream and downstream of the valve seat 52.

The expansion valve of the fifth embodiment has the same advantages as the fourth embodiment when gas-liquid two-phase refrigerant flow flows through the port 2. This reduces noise produced when the refrigerant passes through the orifice 5 and reduces non-continuous noise.

When high-pressure gas-liquid two-phase refrigerant flow containing gas bubbles flows into the valve through the port 3, the expansion valve of the fifth embodiment functions as described below. This usage takes place when the expansion valve is used in a heat-pump refrigerant circuit and refrigerant flows reversibly.

The gas-liquid two-phase refrigerant flowing through the port 3 passes through the refrigerant passage 4 formed between the valve element 51 and the wall surface of the valve chamber 50 and reaches the turbulent portion 43. The direction of the refrigerant flow is changed by the turbulent portion 43 from the axial passage 48 toward the oblique passage 49 so as to cause turbulence in the refrigerant flow. This causes fine gas bubbles in the gas-liquid two-phase refrigerant flow and uniformly distributes the gas bubbles.

Thus, also when the gas-liquid two-phase refrigerant flows into the port 3, the gas bubbles become fine and uniform at the turbulent portion 43 immediately before the orifice 55. Therefore, the pressure fluctuations in the orifice 55 are reduced in the same manner as when the gas-liquid two-phase refrigerant flows into the port 2. This enables the expansion valve of the fifth embodiment to reduce the noise produced when the refrigerant passes through the orifice 55. Additionally, since the refrigerant passage noise becomes continuous, non-continuous noise such as that in the expansion valve of the prior art is reduced.

The present invention may be modified as described below.
(1) Although the expansion valves in the first to fifth embodiments each have single orifices 5, 35, and 55, two or more orifices may be provided as long as turbulent portions 6, 26, 43 is provided upstream of the orifice 5, 35, 55.
   Such modification will not cancel the effect of the turbulent portions 6, 26, and 43 described above.
(2) In the third embodiment, the turbulent portion 6 of the first embodiment is provided both upstream and downstream of the valve seat 11. In the same manner, the turbulent portion 26 in the second embodiment may be provided both upstream and downstream of the valve seat 11.
(3) The gap 15 in the first and second embodiments not only functions to enlarge the cross-sectional area of the passage formed between the orifice 5 and the turbulent portions 6 and 26 but also functions to change the cross-sectional area of the refrigerant passage. The expansion device may be configured such that the gap has only the latter function. This would also cause gas bubbles in the gas-liquid two-phase refrigerant to be fine and reduce noise produced when the refrigerant passes through the orifice 5 and reduce non-continuous noise.
(4) In the first and second embodiments, the turbulent portion 6, 26 is not limited to a spiral groove. The turbulent portion may be formed as independent projections or recesses as long as the refrigerant flow becomes turbulent.
(5) The turbulent portions 6, 26, 43 in the embodiments may be combined when necessary. In this case, the gas bubbles in the gas-liquid two-phase refrigerant flow would become finer and more uniform.

## Claims

1. An expansion valve for arrangement in a refrigerant circuit of a refrigerating apparatus, the expansion valve comprising:
a valve chamber;
an inlet, formed in the valve chamber and connected to an upstream refrigerant pipe, for drawing a refrigerant flow into the valve chamber;
an outlet, formed in the valve chamber and connected to a downstream refrigerant pipe, for discharging the refrigerant flow from the valve chamber;
a refrigerant passage formed between the inlet and outlet in the valve chamber;
an orifice for variably controlling the flow rate of the refrigerant flow in the refrigerant passage; and
a turbulent portion for causing turbulence in the refrigerant flow in the refrigerant passage upstream of the orifice.

2. The expansion valve according to claim 1, wherein the orifice includes a valve seat, which is formed in the valve chamber and has a valve hole, and a valve element for adjusting an open amount of the valve hole.

3. The expansion valve according to claim 2, wherein the turbulent portion is formed by ridges and valleys in either one of an inner surface of the valve chamber or an outer surface of the valve element.

4. The expansion valve according to claim 3, wherein the turbulent portion is formed in the outer surface of the valve element.

5. The expansion valve according to claim 3, wherein the turbulent portion is formed in the inner surface of the valve chamber.

6. The expansion valve according to claim 4 or 5, wherein the turbulent portion is a spiral groove.

7. The expansion valve according to claim 1, wherein the turbulent portion is formed by a meandering passage formed by meandering the refrigerant passage upstream of the orifice between the valve element and the valve seat.

8. The expansion valve according to claim 7, wherein the meandering passage includes an axial passage, which guides the refrigerant flow in an axial direction of the valve element between the valve element and a wall surface of the valve chamber, and an oblique passage, which obliquely changes the direction of the refrigerant flow from the axial passage.

9. The expansion valve according to claim 8, wherein the oblique passage is formed by a recess formed in a distal surface of the valve element and a projection formed in the valve seat, the recess and the projection having opposed, spaced surfaces extending substantially parallel to each other.

10. The expansion valve according to claim 1, wherein the turbulent portion includes a gap for varying a cross-sectional area of the refrigerant passage.

11. 1. The expansion valve according to any one of claims 1 to 6, wherein the refrigerant passage includes a gap enlarging a passage cross-sectional area between the turbulent portion and the orifice.

12. The expansion valve according to any one of claims 1 to 9, wherein the turbulent portion is formed upstream and downstream of the valve seat in the refrigerant passage.

13. The expansion valve according to claim 12, wherein the valve element and the valve chamber are formed upstream and downstream of the valve seat in the refrigerant passage, the turbulent portion is formed in an inner wall surface of each of the valve chambers or an outer surface of each of the valve elements, and the two valve elements are connected by a shaft extending through the valve hole of the valve seat.

14. A refrigerating apparatus employing the expansion valve according to any one of the claims 1 to 5 and 6 to 13.
